# EUROPÄISCHE PATENTSCHRIFT

(11) **EP 1 206 332 B1**
(45) Veröffentlichungstag und Bekanntmachung des Hinweises auf die Patenterteilung: **06.08.2003**
(21) Anmeldenummer: 00967625.5
(22) Anmeldetag: 23.08.2000
(51) Int. Cl.: B23D 63/00, B23D 63/12, B24B 3/26

(54) **VORRICHTUNG ZUR NACHBEARBEITUNG, INSBESONDERE ZUM SCHÄRFEN, EINES MEHRERE ZÄHNE AUFWEISENDEN WERKZEUGS**
DEVICE FOR POST-PROCESSING, MORE PARTICULARLY SHARPENING, A TOOL HAVING A PLURALITY OF TEETH
DISPOSITIF POUR REUSINER, NOTAMMENT POUR AFFUTER UN OUTIL PRESENTANT PLUSIEURS DENTS

(30) Priorität: 26.08.1999 DE 19940635
(43) Veröffentlichungstag der Anmeldung: 22.05.2002
(73) Patentinhaber: REILING GMBH, 75203 Königsbach-Stein (DE)
(72) Erfinder: REILING, Reinhold, 75203 Königsbach-Stein (DE); REILING, Karl, 75203 Königsbach-Stein (DE)
(74) Vertreter: Leitner, Waldemar, Dr. techn.
(86) Internationale Anmeldenummer: EP0008204
(87) Internationale Veröffentlichungsnummer: WO01015847

(56) Entgegenhaltungen:
- EP-A- 0 201 817
- WO-A-99/22898
- US-A- 3 427 903
- US-A- 3 952 616

## Beschreibung

Die Erfindung betrifft eine Vorrichtung zur Nachbearbeitung, insbesondere zum Schärfen, eines mehrere Zähne aufweisenden Werkzeugs, wobei die Vorrichtung eine Auflagefläche aufweist, die Führungselemente besitzt, in denen mindestens zwei Positionierelemente lageveränderlich anordbar und in diesen Führungselementen in einer definierten Position fixierbar sind, so daß die mindestens zwei Positionierelemente einen Anschlag für das nachzubearbeitende Werkzeug ausbilden, wobei vor einer Bearbeitungskante der Auflagefläche ein in einer Halterungseinrichtung aufgenommenes Bearbeitungswerkzeug zur Nachbearbeitung des Werkzeugs angeordnet ist.

Insbesondere bei Heimwerkern besteht das Bedürfnis, die von ihnen verwendeten Werkzeuge - nachdem sie infolge eines entsprechend lang andauernden Gebrauchs stumpf geworden sind - in einfacher Art und Weise nachzubearbeiten, insbesondere schärfen zu können. Das Problem, welches hierbei auftritt, ist, daß das Werkzeug, insbesondere ein Sägeblatt und/oder ein Bohrer, beim Schärfen derart lagefixiert gehalten werden müssen, daß die entsprechend zu bearbeitenden Flächen des Werkzeugs sich in einer definierten Position befinden, in der sie von einem Schärfwerkzeug einfach und für den Benutzer gefahrlos nachbearbeitet werden können.

Aus der US 3,427,903 ist eine Vorrichtung zum Nachbearbeiten eines mehrere Sägezähne aufweisenden Sägewerkzeugs bekannt, die eine Auflagefläche mit einer Bearbeitungskante besitzt, auf die das Sägewerkzeug auflegbar ist. In der Auflagefläche sind orthogonal zur Bearbeitungskante verlaufende Führungselemente vorgesehen, in denen Positionierelemente lageveränderbar angeordnet sind. Diese Positionierelemente dienen dazu, das Sägewerkzeug fest auf der Auflagefläche zu klemmen, also unbeweglich auf dieser zu fixieren, damit die durch eine Vorschubeinrichtung verschiebbare Auflagefläche sukzessive an einem Bearbeitungselement eines vor der Auflagefläche angeordneten Bearbeitungswerkzeugs vorbeibewegt werden kann. Hierbei beaufschlagen die Positionierelemente das Sägewerkzeug an seiner dem Bearbeitungswerkzeug und somit der Bearbeitungskante der Auflagefläche abgewandten Seite.

Diese Vorrichtung besitzt den Nachteil, daß sie aufgrund ihres relativ aufwendigen Aufbaus insbesondere nicht für Heimwerker geeignet ist. Ein weiterer, noch gravierenderer Nachteil besteht darin, daß mit der bekannten Vorrichtung nur langgestreckte Sägewerkzeuge, wie z. B. das Sägeblatt einer Handsäge, bearbeitet werden können, bei dem die Sägezähne linear und geradlinig angeordnet sind. Da zum Bearbeiten der einzelnen Sägezähne des Sägewerkzeugs die Auflagefläche mit dem auf ihr lagefixiert und daher unbeweglich eingespannten Sägewerkzeug mittels der die Auflagefläche bewegenden Vorschubeinrichtung am Bearbeitungswerkzeug vorbeibewegt werden muß, ist es in nachteiliger Art und Weise mit der bekannten Vorrichtung nicht möglich, kreisförmige Werkzeuge, wie z. B. Sägeblätter einer Kreissäge oder ein kreisförmiges Fräswerkzeug, zu bearbeiten. Ein weiterer Nachteil der bekannten Vorrichtung besteht darin, daß es aufgrund der in der Druckschrift beschriebenen Anordnung des Bearbeitungswerkzeugs relativ zur Auflagefläche nur möglich ist, Sägezähne mit einer dreiekkigen Zahnkontur zu bearbeiten. Es ist also nicht möglich, mit der bekannten Vorrichtung anders konfigurierte Sägezähne, z. B. Sägezähne mit einer Trapezform zu schleifen. Aus dem gleichen Grund ist es auch nicht möglich, einen Rücken von Sägszähnen oder Wendszähne zu bearbeiten.

Es ist daher Aufgabe der vorliegenden Erfindung, eine Vorrichtung der eingangs genannten Art derart weiterzubilden, daß die erfindungsgemäße Vorrichtung einen einfachen Aufbau besitzt und insbesondere zum Nachbearbeiten von kreisförmigen Werkzeugen geeignet ist.

Diese Aufgabe wird erfindungsgemäß dadurch gelöst, daß durch die Halterungseinrichtung das Bearbeitungswerkzeug während der Bearbeitung der Zähne durch ein Arretierelement arretiert ist, so daß das Bearbeitungswerkzeug zumindest in einer zur Bearbeitungskante im wesentlichen parallel verlaufenden Richtung während des Bearbeitungsvorgangs in dieser Richtung unbeweglich angeordnet ist, daß die Positionierelemente derart auf der Auflagefläche in ihren Führungselementen angeordnet sind, daß das Werkzeug in seinem der Bearbeitungskante der Auflagefläche zugewandten Bereich in Wirkeingriff mit den Positionierelementen tritt und das Werkzeug durch eine Zuführbewegung, die in einer Zuführrichtung, welche in einer von einer der Bearbeitungskante der Auflagefläche gegenüberliegenden Zuführkante ausgehenden und zur Bearbeitungskante hin gerichteten Orientierung verläuft, zu den Positionierelementen bewegbar ist, und daß durch ein Rückbewegen des Werkzeugs entgegen der vorgenannten Zuführrichtung von den Positionierelementen weg der Wirkeingriff zwischen den Positionierelementen aufhebbar ist.

Durch die erfindungsgemäßen Maßnahmen wird in vorteilhafter Art und Weise eine Vorrichtung geschaffen, die eine einfache Lagepositionierung von insbesondere Sägeblättern zum Schleifen der Sägezähne der Sägeblätter oder von anderen, mindestens einen Zahn aufweisenden kreisförmigen Werkzeugen erlaubt. Indem erfindungsgemäß vorgesehen ist, daß die in der Auflagefläche, die eine gute Abstützung des auf ihr liegenden Werkzeugs bewirkt, angeordneten Führungselemente mit darin lageveränderlich positionierbaren Positionierelementen derart angeordnet sind, daß das von der erfindungsgemäßen Vorrichtung zu bearbeitende Werkzeug durch eine von der Zuführkante in Richtung der Bearbeitungskante verlaufenden Zuführbewegung zu dem dann das Werkzeug in seinem der Bearbeitungskante zugewandten Bereich beaufschlagende Positionierelementen bewegbar ist, wird in vorteilhafter Art und Weise einerseits erreicht, daß die erfindungsgemäße Vorrichtung für eine Vielzahl von kreisförmigen Werkzeugen mit unterschiedlichen Sägeblattdurchmessern verwendbar ist. Außerdem gewährleistet die Lageveränderlichkeit der Positionierelemente in ihren Führungselementen eine einfache Anpassung an unterschiedliche Blattdurchmesser.

Andererseits zeichnet sich die erfindungsgemäße Vorrichtung nicht nur durch ihre einfache Bedienung, sondern auch durch ihren konstruktiv einfachen Aufbau aus, der auf etwaige angetriebene Vorschubeinrichtungen für Bearbeitungswerkzeuge konsequent verzichtet. Das Bearbeitungswerkzeug wird bei der erfindungsgemäßen Vorrichtung in vorteilhafter Art und Weise beim Bearbeitungsvorgang in entsprechender Position vor dem zu bearbeitenden Werkzeug positioniert und bleibt in dieser lagearretierten Stellung während des gesamten Bearbeitungsvorgangs, außer es ist aufgrund unterschiedlicher Zahnkonturen eine Neueinstellung erforderlich.

Ein weitere Vorteil der erfindungsgemäßen Vorrichtung besteht darin, daß mit ihr Zähne beliebiger Kontur und insbesondere auch der Rücken von Zähnen oder trapezförmig gestaltete Zähne oder Wendezähne des Werkzeugs bearbeitbar sind.

Eine vorteilhafte Weiterbildung der Erfindung sieht vor, daß die Vorrichtung eine Aufnahmeeinheit für ein Bohrwerkzeug aufweist, in welcher ein zu schärfender Bohrer lagepositioniert einsetzbar ist. Eine derartige Maßnahme besitzt den Vorteil, daß mit der erfindungsgemäßen Vorrichtungen nicht nur Sägeblätter, sondern auch Bohrwerkzeuge, insbesondere zum Zwecke des Schärfens, nachbearbeitbar sind.

Eine weitere vorteilhafte Weiterbildung der Erfindung sieht vor, daß die Vorrichtung eine Einspannhilfe zum Einspannen eines Bohrwerkzeugs in einen Adapter, der in die Aufnahmeeinrichtung einsetzbar ist, aufweist. Eine derartige Maßnahme besitzt den Vorteil, daß hierdurch besonders einfach die Positionierung des Bohrwerkzeugs im Adapter durchführbar ist.

Eine weitere vorteilhafte Weiterbildung der Erfindung sieht vor, daß die Vorrichtung eine Halteeinrichtung für das Bearbeitungswerkzeug, mit dem die Nachbearbeitung des von der erfindungsgemäßen Vorrichtung lagepositionierten Werkzeugs durchzuführen ist, aufweist. Eine derartige Maßnahme besitzt den Vorteil, daß hierdurch in besonders einfacher Art und Weise eine definierte Positionsbeziehung zwischen dem nachzubearbeitenden Werkzeug und dem entsprechenden Bearbeitungswerkzeug herstellbar ist.

Weitere vorteilhafte Weiterbildungen der Erfindung sind Gegenstand der Unteransprüche.

Weitere Einzelheiten und Vorteile sind dem Ausführungsbeispiel zu entnehmen, das im folgenden anhand der Figuren beschrieben wird. Es zeigen:
- Figur 1: eine Draufsicht auf ein Ausführungsbeispiel einer Vorrichtung,
- Figur 2: das Ausführungsbeispiel der Figur 1 mit aufgelegtem Sägeblatt,
- Figur 3: eine Ansicht des Ausführungsbeispiels aus der Richtung III der Figur 1,

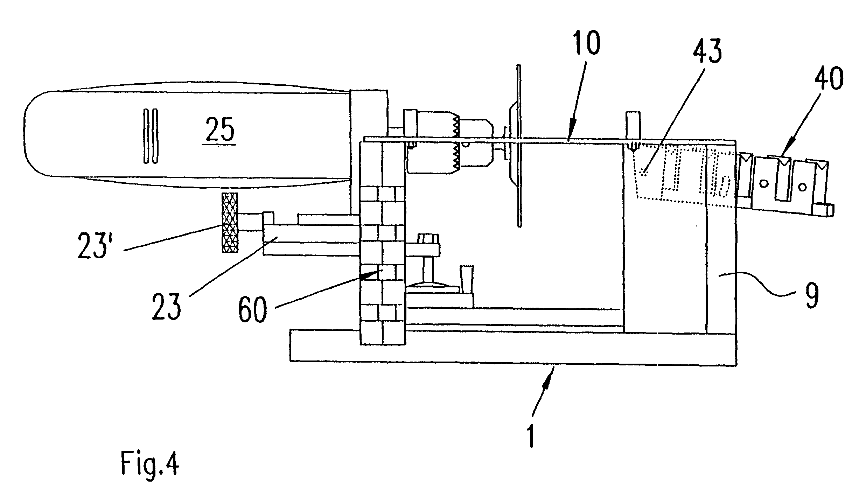

- Figur 4: eine Ansicht des Ausführungsbeispiels aus der Richtung IV der Figur 1,
- Figur 5: eine Darstellung einer Aufnahmeeinrichtung der Vorrichtung,
- Figur 6: eine Ausführungsform eines Adapters für die Aufnahmeeinrichtung,

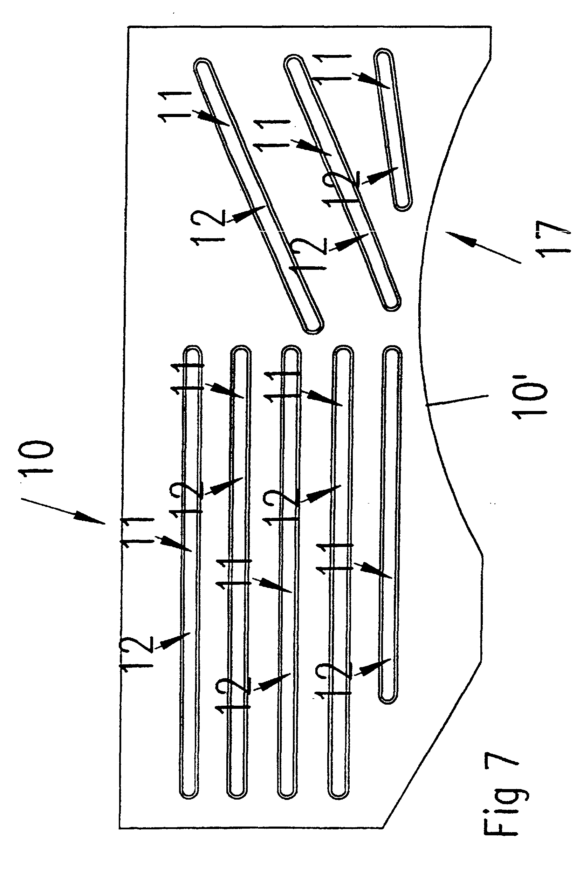

- Figur 7: eine vergrößerte Darstellung einer ersten Ausführungsform einer Auflagefläche des Ausführungsbeispiels,
- Figur 8: eine zweite Ausführungsform der Auflagefläche des Ausführungsbeispiels,
- Figur 9: eine dritte Ausführungsform der Auflagefläche des Ausführungsbeispiels,
- Figur 10: eine vierte Ausführungsform der Auflagefläche des Ausführungsbeispiels,
- Figur 11: eine fünfte Ausführungsform der Auflagefläche des Ausführungsbeispiels, und
- Figur 12: eine sechste Ausführungsform der Auflagefläche des Ausführungsbeispiels.

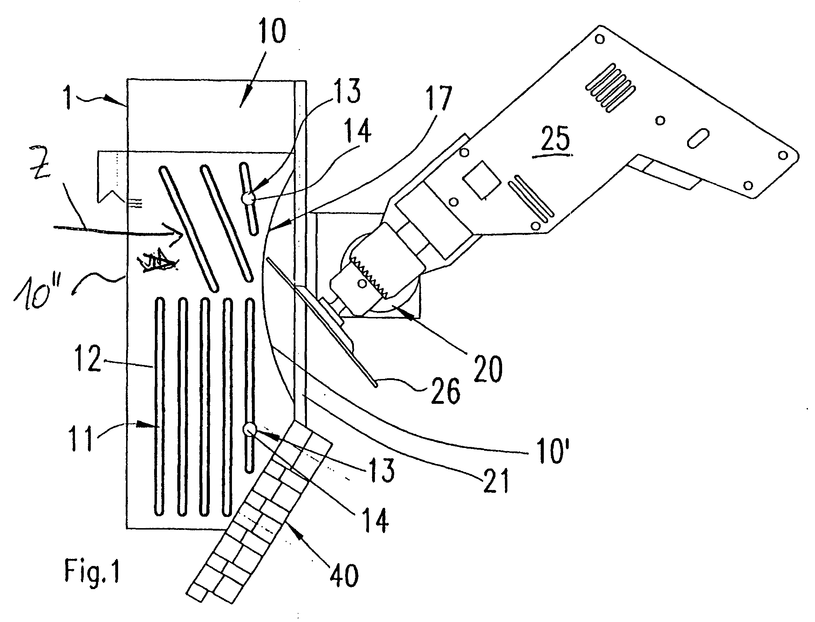

Die in den Figuren 1 bis 3 dargestellte, allgemein mit 1 bezeichnete Vorrichtung zur Nachbearbeitung eines Werkzeugs, insbesondere eines Sägeblatts und/oder eines Bohrwerkzeugs, weist eine Auflagefläche 10 auf, welche auf einer entsprechenden Trägerstruktur 9 der Vorrichtung 1 gelagert ist. Die Auflagefläche 10 weist Führungselemente 11 auf, die - in dem hier gezeigten Fall - als Langschlitze 12 ausgebildet sind. in den Führungselementen 11 sind Positionierelemente 13, die in dem hier gezeigten Fall als Positionierstifte 14 ausgebildet sind, verschiebbar angeordnet.

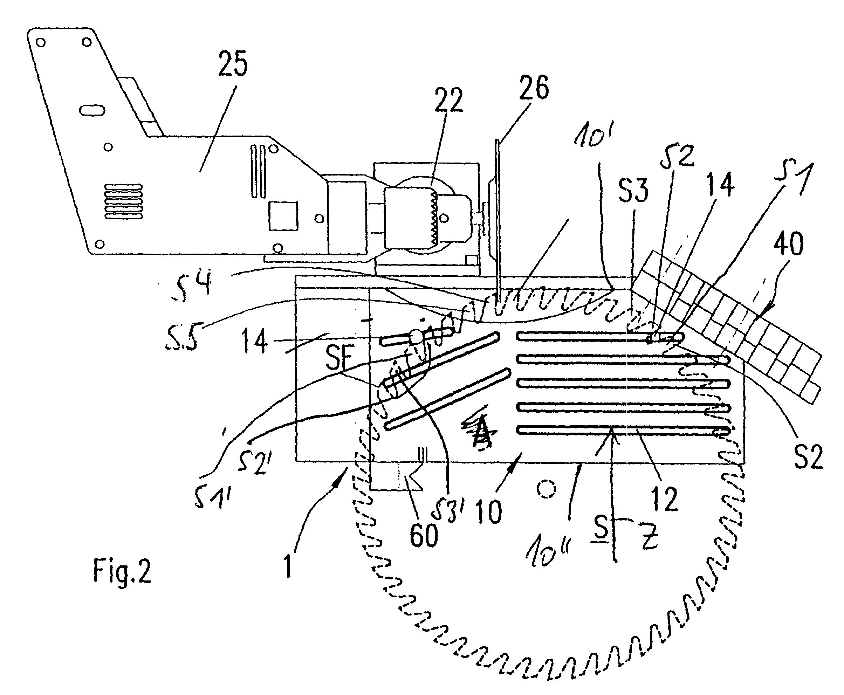

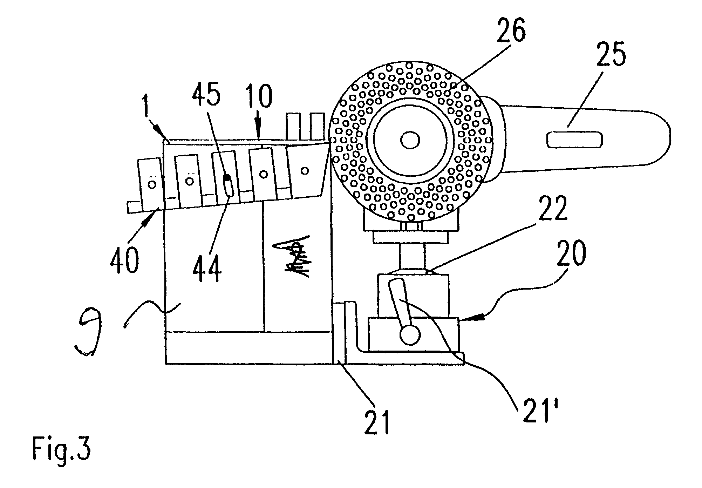

An ihrer Vorderseite weist die Vorrichtung 1 - wie am besten aus den Figuren 2 und 3 ersichtlich ist - eine Halterungseinrichtung 20 für ein Bearbeitungswerkzeug 25, insbesondere eine Schleifvorrichtung mit einer motorisch angetriebenen Schleifscheibe 26, auf. Die Halterungseinrichtung 20 für das Bearbeitungswerkzeug 25 ist entlang einer Schiene 21 der Vorrichtung 1 in Längsrichtung der Auflagefläche 10 und somit im wesentlichen parallel zu einer Bearbeitungskante 10' der Auflagefläche 10 verschiebbar, mittels eines ein Arretierelement darstellenden Arretierhebels 21' lagearretierbar und weist einen Kugelkopf 22 auf, durch den das Bearbeitungswerkzeug 25 in bekannter Art und Weise verschwenkbar ist. Eine Feineinstellung 23 erlaubt durch eine entsprechende Betätigung einer Verstellschraube 23' eine genaue Positionierung des Bearbeitungswerkzeugs 25 und somit der ein Bearbeitungselement des Bearbeitungswerkzeugs 25 darstellenden Schleifscheibe 26 in bezug auf die zu bearbeitende Fläche eines zu bearbeitenden Werkzeugs, z. B. der Schleifscheibe S (siehe Figur 2) und ermöglicht insbesondere eine genaue Regulierung der von der Schleifscheibe 26 abzutragenden Materialdicke. Um die Bewegung der Schleifscheibe 26 des Bearbeitungswerkzeugs 25 nicht zu behindern, ist vorzugsweise vorgesehen, daß die Auflagefläche 10 an ihrer dem Bearbeitungswerkzeug 25 zugewandten Bearbeitungskante 10' eine konkave Ausnehmung 17 besitzt.

Um nun das in Figur 2 strichliert dargestellte Sägeblatt S mittels des Bearbeitungswerkzeugs 25 - insbesondere zum Schärfen - nachbearbeiten zu können, wird das Sägeblatt S plan auf die Auflagefläche 10 gelegt. Die beiden Positionierstifte 14 werden in ihren Führungselementen 11 solange verschoben, bis ein sicherer Anschlag für das Sägeblatt S ausgebildet ist. Hierbei kann vorgesehen sein, daß die Positionierstifte 14 derart in den Führungselementen 11 angeordnet sind, daß die Positionierstifte 14 zumindest teilweise in zwischen zwei Sägezähne S1, S2, S1', S2' befindliche Freiräume eintauchen, wie dies z. B. in Figur 2 dargestellt ist. Es ist aber auch möglich, die Positionierstifte 14 derart anzuordnen, daß sie auf der in Umfangsrichtung des Sägeblatts S verlaufenden Flanke SF des Sägeblatts aufsetzen.

Hierbei wird bevorzugt, daß - wie am besten aus Figur 2 ersichtlich ist - die Positionierstifte 14 auf der Auflagefläche 10 derart angeordnet werden, daß die Positionierstifte 14 das Sägeblatt S in seinem der Bearbeitungskante 10' der Auflagefläche 10 zugewandten, vorderen Teilbereich beaufschlagen. Eine derartige Maßnahme besitzt den Vorteil, daß das Sägeblatt S leicht von den Positionierstiften 14 und unbehindert auf die Auflagefläche 10 der Vorrichtung 1 auflegbar und für den Bearbeitungsvorgang entsprechend positionierbar ist.

Nachdem das Sägeblatt S derart lagepositioniert wurde, wird mit der Schleifscheibe 26 des Bearbeitungswerkzeugs 25 der nun im Bearbeitungsbereich der Schleifscheibe 26 liegende Sägezahn S4 bearbeitet. Hierzu wurde zuvor das Bearbeitungswerkzeug 25 entlang der Schiene 21 der Vorrichtung 1 solange verschoben und gegebenenfalls um den Kugelkopf 22 derart verschwenkt, bis die Schleifscheibe 26 des Bearbeitungswerkzeugs 25 entsprechend dem an dem Sägezahn S4 vorzunehmenden Bearbeitungsvorgang ausgerichtet ist. In dieser Bearbeitungsposition wird dann das Bearbeitungswerkzeug durch Feststellen des ein Arretierelement für das Bearbeitungswerkzeug 25 darstellenden Arretierhebels 21' sowie gegebenenfalls durch eine Arretierung des Kugelkopfs 22 lagefixiert, so daß es sich während der Bearbeitung des Sägezahns S4 - zumindest in Richtung der Schiene 21 - in einer festen Position befindet.

Nach der Bearbeitung des Sägezahns S4 wird das Sägeblatt S entgegen seiner Zuführrichtung Z leicht zurückgezogen, und zwar soweit, bis der Wirkeingriff der Positionierstifte 14 mit dem Sägeblatt S aufgehoben ist und das Sägeblatt S daher durch eine einfache manuelle Drehung in Umfangsrichtung weiterbewegt werden kann, so daß nun nach einer entsprechenden Bewegung des Sägeblatts S in Zuführrichtung Z die beiden Positionierstifte 14 in die in Drehrichtung folgenden Freiräume zwischen den Sägezähnen S2, S3 bzw. S2', S3' eintauchen. Danach wird der nun im Wirkbereich der Schleifscheibe 26 liegende Sägezahn S5 bearbeitet, etc. Da in der Regel sämtliche Sägezähne S1-S5 eines Sägeblatts die gleiche Zahnkontur aufweisen, ist es in diesem Fall nicht erforderlich, die Ausrichtung der Schleifscheibe 26 zu ändern. Selbstverständlich kann bei abweichenden Zahnkonturen der Sägezähne S1-S5 das Bearbeitungswerkzeug 25 durch eine entsprechende Verschiebung entlang der Schiene 21 bzw. durch eine Neueinstellung des Kugelkopfs 22 wie erforderlich neu ausgerichtet werden.

Der vorgenannte Bearbeitungsvorgang - Vorschieben des Sägeblatts S in Zuführrichtung Z von einer der Bearbeitungskante 10' abgewandten Zuführkante 10" der Auflagefläche 10, bis die Positionierstifte 14 in dem der Bearbeitungskante 10' zugewandten Teilbereich des Sägeblatts S mit diesem in Eingriff treten und derart einen Anschlag für das Sägeblatt S ausbilden, Bearbeiten eines Sägezahns S1-S5, Zurückziehen des Sägeblatts S entgegen der Zuführrichtung Z, bis der Wirkeingriff zwischen Sägeblatt S und den Positionierstiften 14 aufgehoben ist, Drehen des Sägeblatts S, bis der nächste zu bearbeitende Sägezahn S1-S5 vor dem Bearbeitungswerkzeug 25 liegt, Vorschieben des Sägeblatts S in Zuführrichtung, bis die Positionierstifte 14 wieder in Wirkeingriff mit dem Sägeblatt S treten - wird nun solange durchgeführt, bis sämtliche der nachzubearbeitenden Sägezähne S1-S3 des Sägeblatts bearbeitet wurden. Dann wird durch ein einfaches Zurückziehen des Sägeblatts S von der Auflagefläche 10 das Sägeblatt S aus der Vorrichtung 1 entfernt.

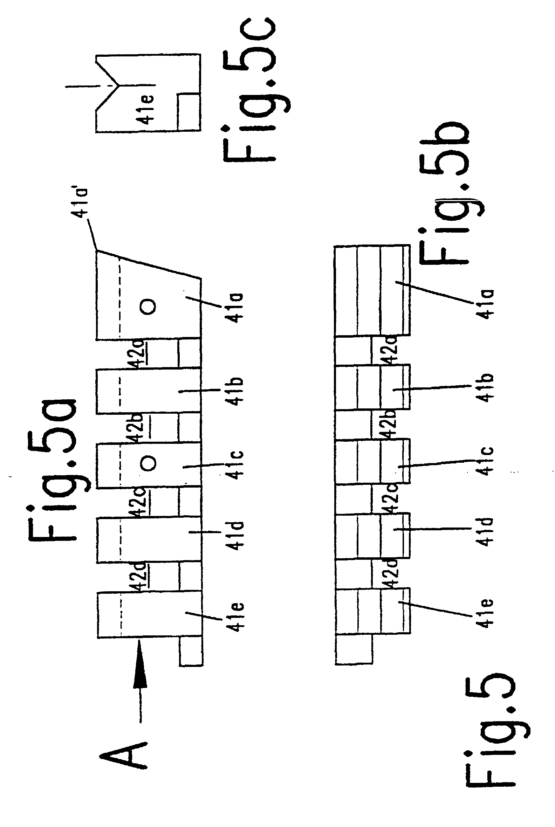

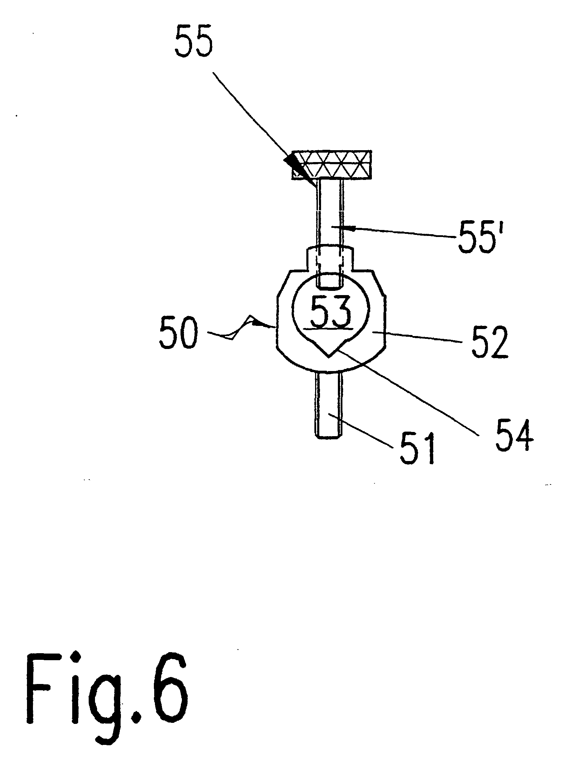

Um nun mit der Vorrichtung 1 nicht nur Sägeblätter oder ähnliche, an ihrem Umfang mit einer nachzubearbeitenden Kontur versehene, vorzugsweise kreisförmige Gegenstände, sondern auch stiftförmige Gegenstände, wie z. B. Bohrer oder ähnliche Bohrwerkzeuge bearbeiten zu können, ist vorzugsweise vorgesehen, daß die Vorrichtung 1 eine Aufnahmeeinrichtung 40 aufweist, in die z. B. ein Bohrer einsetzbar ist. Diese Aufnahmeeinrichtung 40 ist am besten aus Figur 3 ersichtlich und im Detail in Figur 5 dargestellt, wobei die Figur 5a eine Seitenansicht, die Figur 5b eine Draufsicht und die Figur 5c eine weitere Seitenansicht der Aufnahmeeinrichtung 40 aus der Richtung A zeigen. Die Aufnahmeeinrichtung 40 weist eine Anzahl von Aufnahmeblöcken 41a-41e auf, die beabstandet voneinander angeordnet sind, so daß zwischen zwei benachbarten Aufnahmeblöcken 41a-41d ein Zwischenraum 42a-42d vorhanden ist. Diese Zwischenräume 42a-42d sind dabei derart bemessen, daß in diese ein Fortsatz 51 eines in Figur 6 dargestellten Adapters 50 mit Spiel einsetzbar ist. Der Adapter 50 weist ein Zentralelement 52 auf, das mit einer Aufnahmeöffnung 53 für den Bohrer versehen ist. Eine V-förmige Nut 54 erleichtert hierbei die Lagepositionierung von Bohrern mit kleineren Durchmessern in der Aufnahmeöffnung 53. Eine in die Aufnahmeöffnung 53 eintretende Spannschraube 55 dient zur Arretierung des Bohrers in der Aufnahmeöffnung 53. Von Vorteil ist es hierbei, wenn die Spannschraube 55 derart ausgebildet ist, daß ihr Körper 55' ebenfalls in einen der Zwischenräume 42a-42d der Aufnahmeeinheit 40 einsetzbar ist und somit eine den Fortsatz 51 entsprechende Funktion erfüllen kann. Diese Maßnahme erlaubt es in vorteilhafter Art und Weise zwei um 180° zueinander verdrehte Flächen eines stiftförmigen Werkzeugs in einer einzigen Einspannung zu bearbeiten, indem zum Bearbeiten der ersten Fläche zuerst z. B. der Fortsatz 51 in einem der Zwischenräume 42a-42d der Aufnahmeeinrichtung 40 eingesetzt wird, der Adapter 50 nach der Beendigung des Bearbeitungsvorgangs aus der Aufnahmeeinrichtung 40 entnommen um 180° gedreht und danach derart in die Aufnahmeeinrichtung 40 eingesetzt wird, daß der Körper 55' der Spannschraube 55 in einen der Zwischenräume 42a-42d zwischen zwei Aufnahmeblöcken 41a-41e eingesetzt wird.

Nachdem der Bohrer in den Adapter 50 eingespannt wurde, wird nun der Fortsatz 51 in einen der Zwischenräume 42a-42d eingesetzt, so daß der zu bearbeitende vordere Bereich des Bohrers über die Vorderkante 41a' des vorderen Aufnahmeblocks 41a vorspringt. Dann wird die Aufnahmeeinrichtung 40 entsprechend positioniert, indem sie um eine Achse 43 gegenüber der Trägerstruktur 9 der Vorrichtung 1 geschwenkt wird, wobei die Aufnahmeeinrichtung 40 in ihrer endgültigen Position durch ein in einem Langloch 44 angeordnetes Befestigungselement 45 arretiert wird. Die Verschwenkbarkeit der Aufnahmeeinrichtung 40 ist insbesondere beim Schleifen von Vierflächen-Bohrern von Vorteil, da dadurch der Winkel der Schleifscheibe 26 besonders einfach auf den Flächenwinkel der zu bearbeitenden Fläche des Vierflächen-Bohrers eingestellt werden kann. Dann wird das Bearbeitungswerkzeug 25 entsprechend ausgerichtet. Durch ein Vorschieben des mit Spiel in einem der Zwischenräume 42a-42d aufgenommenen Adapters 50 wird nun die zu bearbeitende Fläche des Bohrers gegen die Schleifscheibe 26 gedrückt.

Um nun das lagerichtige Einsetzen des Bohrers in den Adapter 50 zu erreichen, weist die Vorrichtung 1 vorzugsweise eine Einspannhilfe 60 auf.

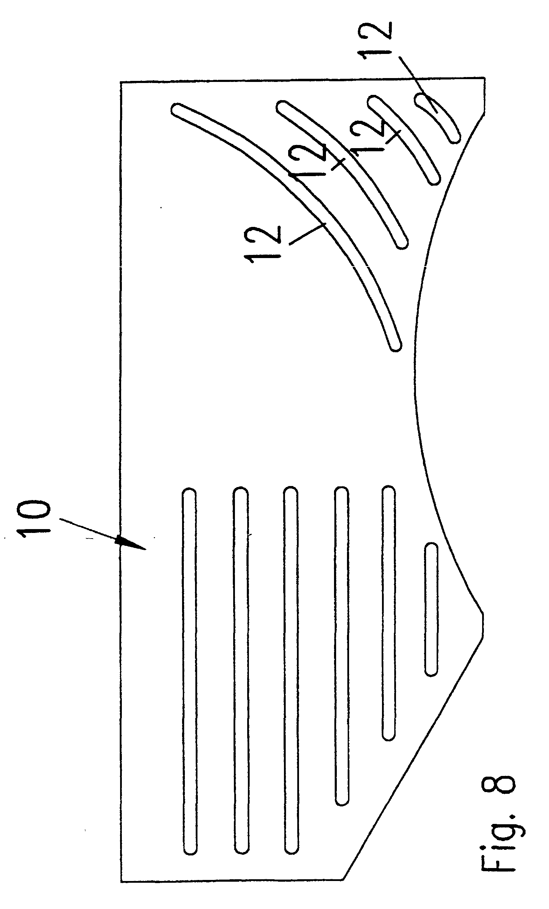

Vorstehend wurde davon ausgegangen, daß jeweils ein Positionierelement 13 jeweils einem als Führungselement 11 fungierenden geradlinig verlaufenden Langschlitz 12 zugeordnet ist. Wie nun die Abbildung der Figur 8 zeigt, ist es nicht erforderlich, daß die Langschlitze 12 geradlinig verlaufend ausgeführt sind. Vielmehr ist auch möglich mindestens einen der Langschlitze 12 der Auflagefläche 10 gekrümmt auszubilden.

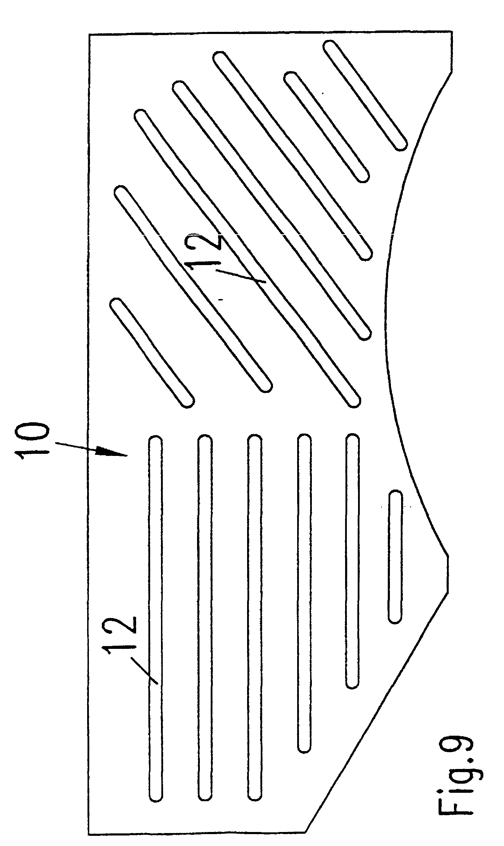

Die Figur 9 zeigt eine weitere Ausführungsform der Auflagefläche 10, bei der die auf der in Figur 9 linken Seite liegenden Langschlitze 12 geradlinig und parallel zur Längserstreckung der Auflagefläche 10 ausgeführt sind, während die in Figur 9 auf der rechten Seite liegenden Langschlitze 12 geradlinig, aber geneigt zur Längsrichtung der Auflagefläche 10 angeordnet sind.

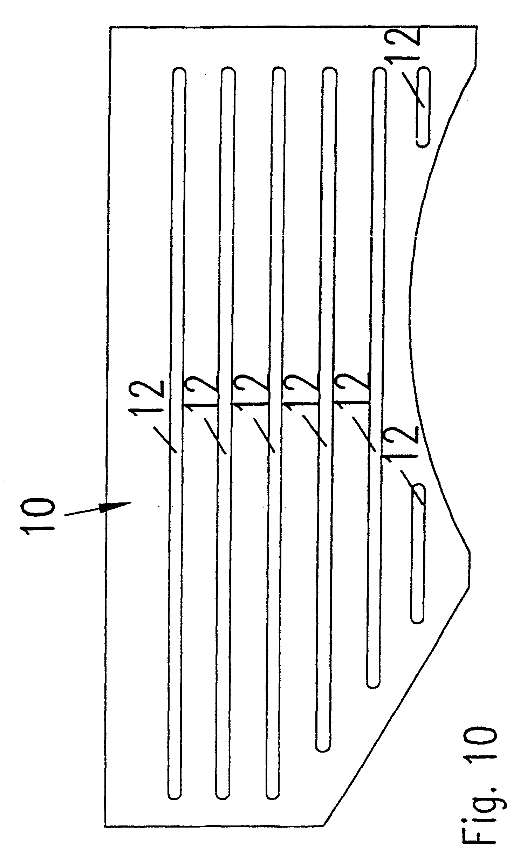

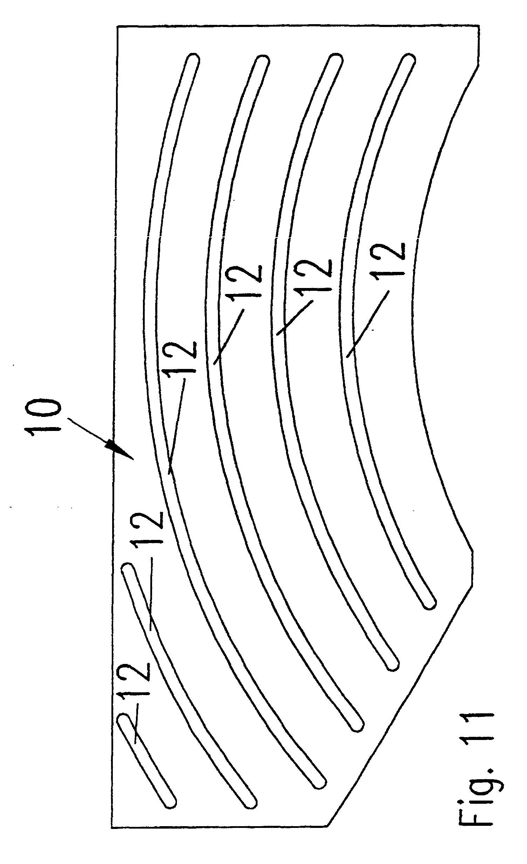

Die Figuren 10 und 11 zeigen nun eine weitere Ausführungsform der Auflagevorrichtung, die sich von den vorgenannten Ausführungen dadurch unterscheidet, daß die Langschlitze 12 im wesentlichen über die gesamte Längserstreckung der Auflagefläche 10 verlaufen, so daß in einem jeden dieser Langschlitze 12 die beiden Positionierstifte 14 einsetzbar sind.

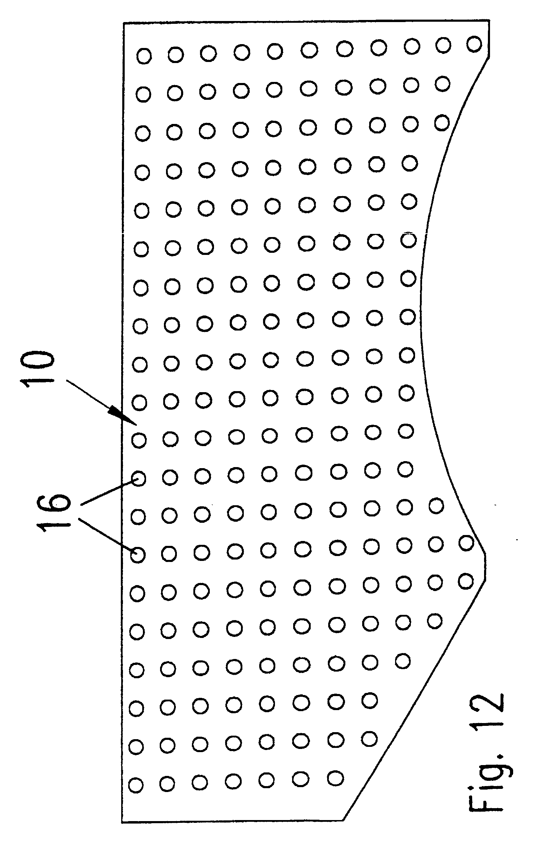

In Figur 12 ist nun eine weitere Ausführungsform der Auflagefläche 10 dargestellt, die sich von den vorgenannten Ausführungen dadurch unterscheidet, daß anstelle der Langschlitze 12 ein matrixförmiges Raster von Öffnungen 16 vorgesehen sind, in welche die als Positionierelemente 13 fungierenden Positionierstifte 14 einsetzbar sind.

## Patentansprüche

1. Vorrichtung zur Nachbearbeitung, insbesondere zum Schärfen, eines mehrere Zähne (S1-S3) aufweisenden nachzubearbeitenden Werkzeugs (S), wobei die Vorrichtung (1) eine Auflagefläche (10) aufweist, die Führungselemente (11; 12, 16) besitzt, in denen mindestens zwei Positionierelemente (13; 14) lageveränderlich anordbar und in diesen Führungselementen (11; 12, 16) in einer definierten Position fixierbar sind, so daß die mindestens zwei Positionierelemente (13; 14) einen Anschlag für das nachzubearbeitende Werkzeug (S) ausbilden, wobei vor einer Bearbeitungskante (10') der Auflagefläche (10) ein in einer Halterungseinrichtung (20) aufgenommenes Bearbeitungswerkzeug (25) zur Nachbearbeitung des nachzubearbeitenden Werkzeugs (S) angeordnet ist, **dadurch gekennzeichnet, daß** durch die Halterungseinrichtung (20) das Bearbeitungswerkzeug (25) während der Bearbeitung der Zähne (S1-S5) durch ein Arretierelement (21') arretiert ist, so daß das Bearbeitungswerkzeug (25) zumindest in einer zur Bearbeitungskante (10') im wesentlichen parallel verlaufenden Richtung während des Bearbeitungsvorgangs in dieser Richtung unbeweglich angeordnet ist, daß die Positionierelemente (13; 14) derart auf der Auflagefläche (10) in ihren Führungselementen (11; 12, 16) angeordnet sind, daß das nachzubearbeitende Werkzeug (S) in seinem der Bearbeitungskante (10') der Auflagefläche (10) zugewandten Bereich in Wirkeingriff mit den Positionierelementen (13; 14) tritt und das nachzubearbeitende Werkzeug (S) durch eine Zuführbewegung, die in einer Zuführrichtung (Z), welche in einer von einer der Bearbeitungskante (10') der Auflagefläche (10) gegenüberliegenden Zuführkante (10") ausgehenden und zur Bearbeitungskante (10') hin gerichteten Orientierung verläuft, zu den Positionierelementen (13; 14) bewegbar ist, und daß durch ein Rückbewegen des nachzubearbeitenden Werkzeugs (S) entgegen der vorgenannten Zuführrichtung (Z) von den Positionierelementen (13; 14) weg der Wirkeingriff zwischen den Positionierelementen (13; 14) aufhebbar ist.

2. Vorrichtung nach Anspruch 1, **dadurch gekennzeichnet, daß** die Auflagefläche (10) derart gestaltet und die Positionierelemente (13; 14) in der Auflagefläche (10) derart angeordnet sind, daß der Wirkeingriff zwischen den Positionierelementen (13; 14) durch ein Zurückziehen des nachzubearbeitenden Werkzeugs (S) entgegen der Zuführrichtung (Z) aufhebbar und nach dieser Rückbewegung des nachzubearbeitenden Werkzeugs (S) dieses auf der Auflagefläche (10) der Vorrichtung (1) zwecks Bewegung des nachzubearbeitenden Werkzeugs (S) in seine nächste Bearbeitungsposition drehbar ist.

3. Vorrichtung nach Anspruch 2, **dadurch gekennzeichnet, daß** jeweils ein Positionierelement (13; 14) in einem Führungselement (11; 12, 16) angeordnet ist.

4. Vorrichtung nach einem der vorangehenden Ansprüche, **dadurch gekennzeichnet, daß** mindestens ein Führungselement (11) einen sich im wesentlichen über die Längsrichtung der Auflagefläche (10) erstreckenden Verlauf aufweist.

5. Vorrichtung nach einem der vorangehenden Ansprüche, **dadurch gekennzeichnet, daß** mindestens ein Führungselement (11) als ein Langschlitz (12) oder als mehrere Öffnungen (16) in der Auflagefläche (10) ausgebildet ist.

6. Vorrichtung nach Anspruch 5, **dadurch gekennzeichnet, daß** die Auflagefläche (10) eine matrixartig angeordnete Vielzahl von Öffnungen (16) aufweist.

7. Vorrichtung nach Anspruch 5, **dadurch gekennzeichnet, daß** mindestens einer der als Führungselement (11) fungierenden Langschlitze (12) einen geradlinigen oder einen gekrümmten Verlauf aufweist.

8. Vorrichtung nach Anspruch 5 oder 7, **dadurch gekennzeichnet, daß** mindestens einer der als Führungselemente (11) fungierenden Langschlitze (12) im wesentlichen parallel zur Längsrichtung der Auflagefläche (10) verlaufend ausgebildet ist.

9. Vorrichtung nach Anspruch 5, 7 und 8, **dadurch gekennzeichnet, daß** mindestens eine der als Führungselement (11) fungierenden Langschlitze (12) im wesentlichen geneigt zur Längsrichtung der Auflagefläche (10) ausgebildet ist.

10. Vorrichtung nach einem der vorangehenden Ansprüche, **dadurch gekennzeichnet, daß** die Vorrichtung (1) eine Aufnahmeeinrichtung (40) für ein stiftförmiges nachzubearbeitendes Werkzeug aufweist.

11. Vorrichtung nach Anspruch 10, **dadurch gekennzeichnet, daß** die Aufnahmeeinrichtung (40) schwenkbar an der Vorrichtung (1) angeordnet ist.

12. Vorrichtung nach einem der Ansprüche 10 oder 11, **dadurch gekennzeichnet, daß** die Aufnahmeeinrichtung (40) mindestens zwei Aufnahmeblöcke (41a-41e) aufweist, zwischen denen ein Zwischenraum (42a-42d) vorgesehen ist, in dem ein Adapter (50) mit Spiel einsetzbar ist.

13. Vorrichtung nach einem der vorangehenden Ansprüche, **dadurch gekennzeichnet, daß** die Vorrichtung (1) einen Adapter (50) aufweist, in dessen Aufnahmeöffnung (53) ein nachzubearbeitendes Werkzeug einsetzbar ist.

14. Vorrichtung nach einem der Ansprüche 12 oder 13, **dadurch gekennzeichnet, daß** der Adapter (50) einen Fortsatz (51; 55) aufweist, der in einem der Zwischenräume (42a-42d) zwischen zwei Aufnahmeblöcken (42a-42e) einsetzbar ist.

15. Vorrichtung nach Anspruch 10, **dadurch gekennzeichnet, daß** ein Adapter (50) eine Spanneinrichtung (55) aufweist, durch die das stiftförmige nachzubearbeitende Werkzeug in einer Aufnahmeeinrichtung (53) des Adapters (50) arretierbar ist.

16. Vorrichtung nach Anspruch 15, **dadurch gekennzeichnet, daß** die Spanneinrichtung als Spannschraube (55) ausgebildet ist, die einen Körper (55') aufweist.

17. Vorrichtung nach Ansprüchen 12 und 16, **dadurch gekennzeichnet, daß** der Körper (55') der Spannschraube (55) in einem der Zwischenräume (42a-42d) der Aufnahmeeinrichtung (40) einsetzbar ist.

18. Vorrichtung nach einem der vorangehenden Ansprüche, **dadurch gekennzeichnet, daß** die Halterungseinrichtung (20) für das Bearbeitungswerkzeug (25) eine Schiene (21) aufweist, entlang der das Bearbeitungswerkzeug (25) verschiebbar und mittels des Arretierelements (21') lagearretierbar ist.

19. Vorrichtung nach einem der vorangehenden Ansprüche, **dadurch gekennzeichnet, daß** die Halterungseinrichtung (20) für das Bearbeitungswerkzeug (25) einen Kugelkopf (22) aufweist, durch den das Bearbeitungswerkzeug (25) verschwenkbar ist.

20. Vorrichtung nach einem der vorangehenden Ansprüche, **dadurch gekennzeichnet, daß** die Halterungseinrichtung (20) für das Bearbeitungswerkzeug (25) eine Feineinstellung (23) zur Positionierung des Bearbeitungswerkzeugs (25) aufweist.

## Claims

1. A device for dressing, in particular for sharpening, a tool having a plurality of teeth (S1-S3), wherein said device (1) comprises a support surface (10) having guiding elements (11; 12, 16), said guiding elements (11; 12, 16) having at least two movable positioning elements (13; 14), said movable positioning elements (13; 14) being adapted to be locked in a fixed position within said guiding elements (11; 12, 16) such that said positioning elements (13; 14) form a stop for said tool (S) to be dressed; and a dressing tool (25) mounted in a holding device (20) positioned in front of a dressing side (10') of said support surface (10),
wherein said dressing tool (25) is locked in position by a locking element (21') during the dressing of said teeth (S1-S3), hence said dressing tool (25) not being movable at least in a direction running substantially parallel to said dressing side (10');
wherein said positioning elements (13; 14) are arranged in said guiding elements (11; 12, 16) in said support surface (10) such that said tool (S) to be dressed engages with said positioning elements (13; 14) at its side turned towards said dressing side (10') of said support surface (10), so that said tool (S) to be dressed can be moved towards said positioning elements (13; 14) by a feed movement proceeding in a feed direction (Z) starting from a feed side (10") of the support surface (10), said feed side (10") being located opposite said dressing side (10') of said support surface (10), and being directed towards said dressing side (10'); and
wherein said engagement between said positioning elements and said tool (S) to be dressed can be discontinued by a return movement of said tool (S) to be dressed, said movement being oppositely directed to said feed movement.

2. The device according to claim 1, wherein said support surface (10) is designed in such a way and that said positioning elements (13; 14) are arranged in said support surface (10) so that the engagement between said positioning elements (13; 14) and said tool (S) is discontinued by pulling back said tool (S) in said direction opposite said feed movement (Z) and said tool (S) to be dressed can be rotated on said support surface (10) of said device (1), for positioning said tool (S) in its subsequent dressing position.

3. The device according to claim 2, wherein one positioning element (13; 14) is positioned in one guiding element (11; 12, 16).

4. The device according to any one of claims 1 to 3, wherein at least one of said guiding elements (11) is extending substantially over the entire length of said support surface (10).

5. The device according to any one of claims 1 to 4, wherein at least one of said guiding elements (11) is designed as an elongated slot (12) or an opening in said support surface (10).

6. The device according to claim 5, wherein said support surface (10) comprises a matrix-like grid of openings (16).

7. The device according to claim 6, wherein at least one of said elongated slots (12) acting as guiding element (11) is of a linear or of a curved design.

8. The device according to any one of the claims 5 or 7, wherein at least one of said elongated slots (12) acting as guiding elements (11) is positioned substantially parallel to the longitudinal direction of said support surface (10).

9. The device according to any one of claims 5, 7 and 8, wherein at least one of said elongated slots (12) acting as guiding elements (11) is positioned inclined to the longitudinal direction of said support surface (10).

10. The device according to any one of claims 1 to 9, comprising a mounting device (40) for a pin shaped tool.

11. The device according to claim 10, wherein said mounting device (40) is pivotally connected to said device (1) for dressing said tool.

12. The device according to any one of claims 10 or 11, wherein said mounting device (40) comprises at least two mounting blocks (41a-41e), said mounting blocks defining a space (42a-42d) wherein an adapter (50) can be inserted with clearance.

13. The device according to any one of claim 1 to 12, wherein said adapter (50) having a mounting opening (53), said mounting opening (53) being capable of receiving a tool.

14. The device according to any one of claims 12 or 13, wherein said adapter (50) comprises an extension (51; 55), said extension (51; 55) being inserted into one of said spaces (42a-42d) defined by said mounting blocks (41a-41e).

15. The device according to claim 10, wherein said adapter (50) additionally comprises a clamping arrangement (55) for securing a pin-shaped tool in said mounting device (53) of said adapter.

16. The device according to claim 15, wherein said clamping arrangement comprises a tightening screw (55) possessing a body (55').

17. The device according to claim 16, wherein said body (55') of said tightening screw (55) can be inserted in one of said spaces (42a-42d) of said mounting device (40).

18. The device according to any one of claims 1 to 17, wherein said holding device (20) for said dressing tool (25) comprises a guide rail (21) along which said dressing tool (25) can be moved and can be locked in position by means of said lokking element (21').

19. The device according to any one of claims 1 to 18, wherein said holding device (20) additionally comprises a ball end bearing (22) for said dressing tool (25) enabling said dressing tool (25) to be tilted.

20. The device according to any one of claims 1 to 19, wherein said holding device (20) possesses an adjustment means (23) for positioning said dressing tool (25).

## Revendications

1. Dispositif pour le façonnement ultérieur, en particulier pour l'affûtage d'un outil (S) qui doit faire l'objet d'un façonnement ultérieur et qui présente plusieurs dents (S1 - S3), dans lequel le dispositif (1) présente une surface d'appui (10) qui possède des éléments de guidage (11 ; 12, 16) dans lesquels peuvent venir se disposer au moins deux éléments de positionnement (13 ; 14) de telle sorte que leur position peut être modifiée, lesdits éléments de positionnement pouvant venir se fixer dans une position définie dans ces éléments de guidage (11 ; 12, 16) de telle sorte que les éléments de positionnement (13 ; 14), au moins au nombre de deux, forment une butée pour l'outil (S) qui doit faire l'objet d'un façonnement ultérieur, dans lequel, devant une bord de façonnement (10') de la surface d'appui (10), vient se disposer un outil de façonnement (25) logé dans un mécanisme de maintien (20) destiné au façonnement ultérieur de l'outil (S) qui doit faire l'objet d'un façonnement ultérieur, **caractérisé en ce que** l'outil de façonnement (25), via le mécanisme de maintien (20), est bloqué par un élément de blocage (21') lors du façonnement des dents (S1 - S5), de telle sorte que l'outil de façonnement (25) est disposé en immobilité, au moins dans une direction s'étendant essentiellement parallèlement au bord de façonnement (10'), au cours du processus de façonnement dans ladite direction, **en ce que** les éléments de positionnement (13 ; 14) sont disposés sur la surface d'appui (10) dans leurs éléments de guidage (11 ; 12, 16) de telle sorte que l'outil (S) qui doit faire l'objet d'un façonnement ultérieur entre en contact de travail, dans sa zone tournée dans la direction du bord de façonnement (10') de la surface d'appui (10), avec les éléments de positionnement (13 ; 14) et que l'outil (S) qui doit faire l'objet d'un façonnement ultérieur, via un mouvement d'introduction, c'est-à-dire dans une direction d'introduction (Z) qui s'étend depuis un bord d'introduction (10") opposé au bord de façonnement (10') de la surface d'appui (10) et qui va dans la direction du bord de façonnement (10'), est mobile dans la direction s'étendant vers les éléments de positionnement (13 ; 14), et **en ce que**, via un mouvement de retour de l'outil (S) qui doit faire l'objet d'un façonnement ultérieur, opposé à la direction d'introduction précitée (Z), s'écartant des éléments de positionnement, le contact de travail entre les éléments de positionnement peut être supprimé.

2. Dispositif selon la revendication 1, **caractérisé en ce que** la surface d'appui (10) est réalisée de telle sorte que les éléments de positionnement (13 ; 14) sont disposés dans la surface d'appui (10) de telle sorte que le contact de travail entre les éléments de positionnement (13 ; 14) peut être supprimé via un retrait en arrière de l'outil (S) qui doit faire l'objet d'un façonnement ultérieur à l'encontre de la direction d'introduction (Z) et après ce mouvement de retour de l'outil (S) qui doit faire l'objet d'un façonnement ultérieur, ce dernier peut effectuer une rotation sur la surface d'appui (10) du dispositif (1) à des fins de mouvement de l'outil (S) qui doit faire l'objet d'un façonnement ultérieur, dans sa position de façonnement suivante.

3. Dispositif selon la revendication 2, **caractérisé en ce qu'**un élément de positionnement (13 ; 14) est disposé respectivement dans un élément de guidage (11 ; 12, 16).

4. Dispositif selon l'une quelconque des revendications précédentes, **caractérisé en ce qu'**au moins un élément de guidage (11) présente une allure qui s'étend essentiellement dans la direction longitudinale de la surface d'appui (10).

5. Dispositif selon l'une quelconque des revendications précédentes, **caractérisé en ce qu'**au moins un élément de guidage (11) est réalisé en forme de fente oblongue (12) ou sous la forme de plusieurs ouvertures (16) pratiquées dans la surface d'appui (10).

6. Dispositif selon la revendication 5, **caractérisé en ce que** la surface d'appui (10) présente une multitude d'ouvertures (16) disposées à la manière d'une matrice.

7. Dispositif selon la revendication 5, **caractérisé en ce qu'**au moins une des fentes oblongues (12) faisant office d'élément de guidage (11) présente une allure rectiligne ou une allure courbe.

8. Dispositif selon la revendication 5 ou 7, **caractérisé en ce qu'**au moins une des fentes oblongues (12) faisant office d'éléments de guidage (11) est réalisée pour s'étendre essentiellement parallèlement à la direction longitudinale de la surface d'appui (10).

9. Dispositif selon les revendications 5, 7 et 8, **caractérisé en ce qu'**au moins une des fentes oblongues (12) faisant office d'éléments de guidage (11) est réalisée essentiellement en l'inclinaison par rapport à la direction longitudinale de la surface d'appui (10).

10. Dispositif selon l'une quelconque des revendications précédentes, **caractérisé en ce que** le dispositif (1) présente un mécanisme de réception (40) pour un outil qui doit faire l'objet d'un façonnement ultérieur, en forme de tige.

11. Dispositif selon la revendication 10, **caractérisé en ce que** le mécanisme de réception (40) est disposé en pivotement sur le dispositif (1).

12. Dispositif selon l'une quelconque revendication 10 ou 11, **caractérisé en ce que** le mécanisme de réception (40) présente au moins deux blocs de réception (41a - 41e) entre lesquels on prévoit un espace intermédiaire (42a - 42d) dans lequel peut venir s'insérer l'adaptateur (50) avec du jeu.

13. Dispositif selon l'une quelconque des revendications précédentes, **caractérisé en ce que** le dispositif (1) présente un adaptateur (50) dans l'ouverture de réception (53) duquel peut venir s'insérer un outil qui doit faire l'objet d'un façonnement ultérieur.

14. Dispositif selon l'une quelconque des revendications 12 ou 13, **caractérisé en ce que** l'adaptateur (50) présente une saillie (51 ; 55) qui peut venir s'insérer dans un des espaces intermédiaires (42a - 42d) ménagés entre deux blocs de réception (42a - 42e).

15. Dispositif selon la revendication 10, **caractérisé en ce qu'**un adaptateur (50) présente un mécanisme de serrage (55) par lequel l'outil en forme de tige qui doit faire l'objet d'un façonnement ultérieur peut être bloqué dans un mécanisme de réception (53) de l'adaptateur (50).

16. Dispositif selon la revendication 15, **caractérisé en ce que** le mécanisme de serrage est réalisé sous la forme d'une vis de serrage (55) qui présente un corps (55').

17. Dispositif selon les revendications 12 et 16, **caractérisé en ce que** le corps (55') de la vis de serrage (55) peut venir s'insérer dans un des espaces intermédiaires 42a - 42d) du mécanisme de réception (40).

18. Dispositif selon l'une quelconque des revendications précédentes, **caractérisé en ce que** le mécanisme de maintien (20) pour l'outil de façonnement (25) présente un rail (21) le long duquel peut se déplacer l'outil de façonnement (25) et peut être bloqué en position à l'aide de l'élément de blocage (21').

19. Dispositif selon l'une quelconque des revendications précédentes, **caractérisé en ce que** le mécanisme de maintien (20) pour l'outil de façonnement (25) présente une tête sphérique (22) par laquelle l'outil de façonnement (25) est à même de pivoter.

20. Dispositif selon l'une quelconque des revendications précédentes, **caractérisé en ce que** le mécanisme de maintien (20) pour l'outil de façonnement (25) présente un réglage fin (23) pour le positionnement de l'outil de façonnement (25).
